# EUROPÄISCHE PATENTSCHRIFT

(11) **EP 2 600 490 B1**
(45) Veröffentlichungstag und Bekanntmachung des Hinweises auf die Patenterteilung: **26.08.2015**
(21) Anmeldenummer: 11191479.2
(22) Anmeldetag: 01.12.2011
(51) Int. Cl.: H02J 3/00, H02M 5/458, H02J 9/06

(54) **Anordnung zur unterbrechungsfreien Stromversorgung**
Assembly for an uninterrupted power supply
Agencement destiné à l'alimentation en courant sans interruption

(43) Veröffentlichungstag der Anmeldung: 05.06.2013
(73) Patentinhaber: AEG Power Solutions GmbH, 59581 Warstein-Belecke (DE)
(72) Erfinder: Martin, Xavier, 59581 Warstein (DE); Noack, Hendrik, 01561 Schönborn (DE); Winkler, Detlef, 59494 Soest (DE)
(74) Vertreter: Graefe, Jörg

(56) Entgegenhaltungen:
- JP-A- 9 037 488
- JP-A- 2006 042 530
- US-A1- 2008 265 680
- US-B1- 6 201 319

## Beschreibung

Die vorliegende Erfindung betrifft eine Anordnung zur unterbrechungsfreien Stromversorgung mit einem Gleichrichter, einem Energiespeicher zum Speichern elektrischer Energie, einem Wechselrichter, einem Schaltmittel und einer Steuerung. Der Gleichrichter kann mit einem Gleichrichtereingang an ein Versorgungsnetz angeschlossen werden. Der Energiespeicher ist an einen Gleichrichterausgang des Gleichrichters und an einen Wechselrichtereingang des Wechselrichters angeschlossen. An einen Wechselrichterausgang des Wechselrichters kann ein abzusicherndes Netz oder ein abzusichernder Verbraucher angeschlossen werden. Der Gleichrichtereingang oder das Versorgungsnetz können über das Schaltmittel mit dem Wechselrichterausgang verbunden werden und der Gleichrichter, der Wechselrichter und das Schaltmittel können mittels der Steuerung gesteuert oder geregelt werden.

Aus dem Stand der Technik sind eine Vielzahl derartiger Anordnungen zur unterbrechungsfreien Stromversorgung, auch kurz USV genannt, bekannt. Es wird dabei u.a. zwischen dem Typ der Offline-USV und der Online-USV unterschieden.

Eine USV im Offline-Betrieb, auch als Voltage and Frequency Dependent USV (VFD-USV) bzw. passive USV bezeichnet, leitet den Strom bei ungestörtem Versorgungsnetz direkt vom Versorgungsnetz über das geschlossene Schaltmittel, das abzusichernde Netz oder die abzusichernde Last weiter. Außerdem wird vom Eingang der Gleichrichter versorgt, der den elektrischen Energiespeicher lädt. Sollte die Netzversorgung gestört sein, wird mit dem Schaltmittel umgeschaltet und der Ausgang des Wechselrichters, der aus dem Gleichrichter oder dem Energiespeicher gespeist wird, wird mit dem abzusichernden Netz oder der abzusichernden Last verbunden.

Bei einer USV im Online-Betrieb, auch als Voltage and Frequency Independent USV (VFI-USV), Dauerbetriebs-USV, Doppelwandler-USV u. ä. bezeichnet, ist das Versorgungsnetz auf den Eingang des Gleichrichters geführt, der den Energiespeicher speist. Das abzusichernde Netz oder der abzusichernde Verbraucher wird von dem Wechselrichter versorgt, der bei ungestörtem Versorgungsnetz, also bei vorhandener Netzspannung am Gleichrichtereingang, die notwendige Energie über den Gleichrichter bezieht und bei Netzausfall über die Energiespeicher versorgt wird.

Die Wechselspannung am Wechselrichterausgang wird über den Wechselrichter aus der Gleichspannung des sogenannten Zwischenkreises zwischen dem Gleichrichter und dem Wechselrichter erzeugt.

Zur Erhöhung der Versorgungssicherheit ermöglicht bei einer VFI-USV das Schaltmittel, welches bei fehlerfreier Funktion des Gleichrichters und des Wechselrichters das Versorgungsnetz über den Gleichrichter und den Wechselrichter mit dem abzusichernden Netz bzw. dem abzusichernden Verbraucher verbindet, eine so genannte Bypass-Schaltung, die das Versorgungsnetz und das abzusichernde Netz bzw. den abzusichernden Verbraucher über das Schaltmittel unter Umgehung des Gleichrichters und des Wechselrichters verbindet. Bei Auftreten eines Fehlers im Gleichrichter oder Wechselrichter wird der angeschlossene Verbraucher auf diesen Bypass umgeschaltet und somit weiter versorgt.

Die Topologie einer Offline-USV und einer Online-USV können einander entsprechen. Sie lassen sich grundsätzlich an der unterschiedlichen Stellung und Aufgabe des Schaltmittels unterscheiden. Bei einer geeigneten Auslegung der Komponenten einer USV und einer geeigneten Steuerung kann man daher eine Offline-USV in eine Online-USV umwandeln und umgekehrt.

Bei einer von der Anmelderin hergestellten und vertriebenen Online-USV umfasst die Steuerung drei über einen CAN-BUS verbundene Steuerungsteile, von denen ein Steuerungsteil zur Steuerung und/oder Regelung des Gleichrichters, ein Steuerungsteil zur Steuerung und/oder Regelung des Wechselrichters und ein Steuerungsteil zur Steuerung und/oder Regelung des Schaltmittels vorgesehen sind. Jedes Steuerungsteil weist eine integrierte eigene Hilfsstromversorgung auf, durch die das Steuerungsteil mit Hilfsstrom versorgt wird. Fällt ein Steuerungsteil oder eine das Steuerungsteil versorgende Hilfsstromversorgung aus, kann dieser Steuerungsteil nicht zur Versorgung der an die USV angeschlossenen Netze oder Lasten beitragen.

Außerdem sind in jedem Steuerungsteil Sensoren integriert, mit denen verschiedene elektrische Größen am Eingang bzw. am Ausgang des Gleichrichters oder des Wechselrichters oder an anderen Stellen der USV gemessen werden können. Dazu ist jedes Steuerungsteil über Messleitungen mit den Messstellen verbunden. An den Messleitungen liegen zum Teil hohe Spannungen an, die mitunter Störquellen ausgesetzt sind, was zu gestörten Messergebissen führen kann, wenn nicht hinreichende Maßnahmen gegen ein Störung der Messung getroffen sind.

Das Dokument JP 2006 042 530 offenbart eine Anordnung zur unterbrechungsfreien Stromversorgung gemäß dem Obergriff des Anspruchs 1.

Der Erfindung liegt daher die Aufgabe zu Grunde, eine Anordnung zur unterbrechungsfreien Stromversorgung der eingangs genannten Art so zu verbessern, dass eine höhere Ausfallsicherheit und eine geringere Störanfälligkeit erreicht wird. Insbesondere soll auch die Störanfälligkeit der Messung von elektrischen Größen herabgesetzt werden.

Diese Aufgabe wird dadurch gelöst, dass die Steuerung zwei Steuerungssteile aufweist, die zumindest im Hinblick auf das Schaltmittel redundant aufgebaut sind und dass mit einem ersten der Steuerungsteile gleichzeitig der Gleichrichter und das Schaltmittel und mit einem zweiten der Steuerungsteile der Wechselrichter und das Schaltmittel steuer- oder regelbar ist. Möglich wäre es auch, dass eines der Steuerungsteile oder beide Steuerungsteile auch im Hinblick auf den Gleichrichter und/oder den Wechselrichter redundant aufgebaut sind, so dass mit dem auch im Hinblick auf den Gleichrichter oder den Wechselrichter redundanten Steuerungsteil gleichzeitig der Gleichrichter, der Wechselrichter und das Schaltmittel steuer- oder regelbar ist.

Bei einer erfindungsgemäßen Anordnung sind anderes als beim Stand der Technik nicht drei Steuerungsteile vorgesehen sondern nur zwei. Zugleich sind die Steuerungsteile so gestaltet, dass zumindest das Schaltmittel mit jedem der Steuerungsteile gesteuert und/oder geregelt werden und möglicherweise auch der Gleichrichter, der Wechselrichter und das Schaltmittel mit einem der Steuerungsteile oder mit jedem der Steuerungsteile gesteuert und/oder geregelt werden kann bzw. können. Im Grunde könnte ein einziger Steuerungsteil für einen Betrieb der Anordnung ausreichen. Durch die erfindungsgemäß vorgesehene Redundanz wird eine höhere Ausfallsicherheit erreicht, obwohl im Vergleich zum Stand der Technik die Anzahl der Steuerungsteile reduziert wird.

Vorteilhaft sind die Steuerungsteile durch identisch aufgebaute Schaltungsanordnungen gebildet, selbst wenn die Steuerungsteile nicht zum Steuern oder Regeln des Wechselrichters, des Gleichrichters und des Schaltmittels vorgesehen sind. Dadurch ist sichergestellt, dass beide Steuerungsteile die Steuerung bzw. Regelung zumindest des Schaltmittels und möglicherweise des Wechselrichters, Gleichrichters und des Schaltmittels übernehmen können. Außerdem kann durch Verwendung identischer Schaltungsanordnungen die Herstellung der Anordnung vereinfacht werden.

Die Steuerungsteile können programmiert sein, wobei sich die Programmierung der Steuerungsteile dadurch unterscheiden kann, dass mit dem ersten Steuerungsteil der beiden Steuerungsteile bei ungestörtem ersten Steuerungsteil zumindest der Gleichrichter steuer- und/oder regelbar und mit dem zweiten Steuerungsteil der beiden Steuerungsteile bei ungestörtem zweiten Steuerungsteil zumindest der Wechselrichter steuer- und/oder regelbar ist. Jedem Steuerungsteil kann durch die Programmierung der Gleichrichter oder der Wechselrichter zugewiesen werden, wobei das Steuerungsteil im störungsfreien Betrieb der Steuerung die zugewiesene Komponente steuert. Zusätzlich kann dem Steuerungsteil auch das Schaltmittel und/oder die andere Komponente zugewiesen werden, wenn zum Beispiel das andere Steuerungsteil ausfällt.

Dadurch das bei ungestörter Steuerung der Gleichrichter dem ersten Steuerungsteil und der Wechselrichter dem zweiten Steuerungsteil zugewiesen ist, ist bei ungestörter Steuerung sichergestellt, dass die Steuerungsteile nicht voll belastet sind, insbesondere thermisch belastet sind, was zu einer höheren Lebensdauer der Schaltungsteile führt.

Bei gestörtem ersten Steuerungsteil kann der Wechselrichter und das Schaltmittel und ggf. der Gleichrichter vom zweiten Steuerungsteil steuer- und/oder regelbar und bei gestörtem zweiten Steuerungsteil kann der Gleichrichter und das Schaltmittel und ggf. der Wechselrichter vom ersten Steuerungsteil steuer- und/oder regelbar sein.

Eine erfindungsgemäße Schaltungsanordnung kann wenigstens zwei Mittel zur Hilfsstromversorgung aufweisen und jedes Mittel zur Hilfsstromversorgung mit einem Eingang für die Hilfsstromversorgung des ersten Steuerungsteils und einem Eingang für die Hilfsstromversorgung des zweiten Steuerungsteils verbunden ist, um die Steuerungsteile mit elektrischer Energie zu versorgen.

Eine erfindungsgemäße Schaltungsanordnung kann wenigstens zwei Mittel zur Hilfsstromversorgung, nämlich ein erstes und ein zweites Mittel zur Hilfsstromversorgung mit je zwei Ausgängen aufweisen. An den Ausgängen kann eine Hilfsspannung abgreifbar sein. Eine erster der beiden Ausgänge des ersten und des zweiten Mittels zur Hilfsstromversorgung kann mit einem Eingang für die Hilfsstromversorgung des ersten Steuerungsteils und eine zweiter der beiden Ausgänge des ersten und des zweiten Mittels zur Hilfsstromversorgung kann mit einem Eingang für die Hilfsstromversorgung des zweiten Steuerungsteils verbunden sein.

Die beiden Ausgänge der Mittel zur Hilfsstromversorgung sind vorzugsweise so von einander entkoppelt, dass bei einer Störung des einen Ausgangs, zum Beispiel durch einen Kurzschluss, der andere Ausgang des gleichen Mittels zur Hilfsstromversorgung ohne Beeinträchtigung bleibt. Außerdem sind vorzugsweise die beiden Eingänge der Steuerungsteile ebenso entkoppelt, so dass die eine Störung an einem Eingang für die Hilfsstromversorgung ohne Einfluss auf den anderen Eingang des gleichen Steuerungsteils bleibt.

Eine erfindungsgemäße Schaltungsanordnung kann alternativ wenigstens zwei Mittel zur Hilfsstromversorgung mit je einem Ausgang aufweisen, an welchem eine Hilfsspannung abgreifbar ist, wobei jeder Ausgang eines Mittels zur Hilfsstromversorgung mit einem Eingang für die Hilfsstromversorgung des ersten Steuerungsteils und des zweiten Steuerungsteils verbunden ist.

Anders als beim Stand der Technik sind mehrere von der Steuerung getrennte Mittel zur Hilfsstromversorgungen vorgesehen. Die Mittel zur Hilfsstromerzeugung sind anderes als beim Stand der Technik auch nicht mehr einem Steuerungsteil besonders zugewiesen und nicht integrale Teile der Steuerungsteile. Daher wird an die Steuerungsteile der Erfindung auch keine vergleichsweise hohe Spannung herangeführt, die an einem Eingang der Hilfsstromversorgung anliegt und bei herkömmlichen Steuerungsteilen mit integraler Hilfsstromversorgung auch am Steuerungsteil anliegt. Vielmehr kann jedes Mittel zur Hilfsstromversorgung das erste Steuerungsteil und/oder das zweite Steuerungsteil mit der Hilfsenergie versorgen. Auch die Hilfsstromversorgung ist somit redundant aufgebaut. Vorteilhaft werden bei ungestörter Hilfsstromversorgung beide Mittel zur Hilfsstromerzeugung so betrieben, dass sie nur die Hälfte der benötigten Leistung bereitstellen müssen, was zu einer geringeren Belastung der Mittel zur Hilfsstromversorgung, insbesondere zu einer geringeren thermische Belastung und damit zu einer höheren Lebensdauer der Mittel zur Hilfsstromversorgung führt.

Vorteilhaft sind die Mittel zur Hilfsstromversorgung identisch aufgebaute Schaltungsanordnungen, was insbesondere die Herstellung der erfindungsgemäßen Anordnung vereinfacht.

Jedes Mittel zur Hilfsstromversorgung kann einen ersten Eingang, einen zweiten Eingang und einen dritten Eingang und ggf. einen vierten Eingang aufweisen. Über die Eingänge kann das Mittel mit dem Gleichrichtereingang, mit dem Wechselrichterausgang , mit dem Energiespeicher oder dem Eingang des Schaltmittels verbunden sein. Die Versorgung der Mittel zur Hilfsstromversorgung kann über jeden der drei bzw. vier Eingänge erfolgen.

Eine erfindungsgemäße Anordnung kann Sensoren zum Messen von Spannungen und/oder Strömen aufweisen, wobei jeder Sensor über einen Sensorausgang des Sensors mit genau einem Steuerungsteil verbunden sein kann und mit jedem Sensor eine zu messende Größe in ein Kleinspannungssignal, insbesondere ein Schutzkleinspannungssignal gewandelt werden kann, das über eine den Sensor und das Steuerungsteil verbindende Leitung dem Steuerungsteil zugeführt werden kann.

Zumindest ein Teil der Sensoren können einander paarweise zugeordnet sein, wobei die Sensoren eines Sensorpaares zur Messung der gleichen elektrischen Größe mit Kontakten oder Leitungen der Anordnung verbunden sein kann und wobei der eine Sensor eines Sensorpaares mit dem ersten Steuerungsteil und der andere Sensor eines Sensorpaares mit dem zweiten Steuerungsteil verbunden sein kann.

Mittels der Sensoren kann die Spannung am Gleichrichtereingang, am Gleichrichterausgang, am Energiespeicher, am Wechselrichtereingang, am Wechselrichterausgang, an der dem Versorgungsnetz zugewandten Seite des Schaltmittel und/oder an der dem abzusichernden Netz oder der abzusichernden Last zugewandten Seite des Schaltmittel gemessen werden. In den Steuerungsteilen können die Messsignale zur Regelung und/oder Steuerung des Gleichrichters, des Wechselrichters und/oder des Schaltmittels verwendet werden.

Die Sensoren können durch identisch aufgebaute Schaltungsanordnungen gebildet sein.

Die Steuerungsteile sind vorzugsweise über einen Kommunikationsbus, zum Beispiel einem CAN-Bus miteinander verbunden.

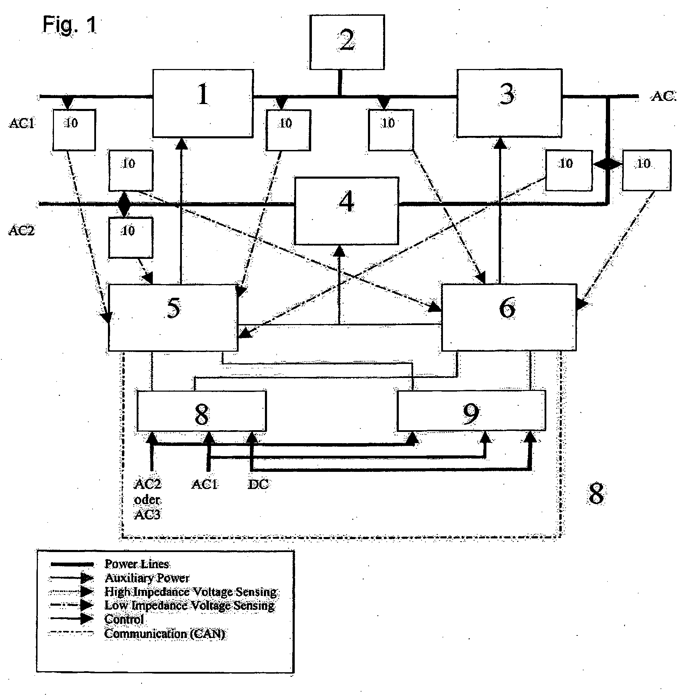

Weitere Merkmale und Vorteile der Erfindung werden anhand der nachfolgenden Beschreibung eines Ausführungsbeispiels erläutert. Darin zeigt
- Fig. 1: eine schematische Darstellung einer erfindungsgemäßen Online-USV.

Die erfindungsgemäße USV ist in der Fig. 1 einpolig dargestellt, d.h. es ist nur ein Außenleiter der USV nicht jedoch ein Neutralleiter der USV dargestellt. Ebenso wenig sind Gleichspannungen zweipolig dargestellt.

Die erfindungsgemäße USV weist einen Gleichrichter 1, einen Energiespeicher 2, einen Wechselrichter 3 und ein Schaltmittel 4 auf. Ein Eingang des Gleichrichters 1 ist mit einem Versorgungsnetz AC1 verbunden. Ein Ausgang des Gleichrichters 1 ist zum Einen mit dem Energiespeicher 2 und zum Anderen mit einem Eingang des Wechselrichters 3 verbunden. Ein Ausgang des Wechselrichters 2 ist mit einem abzusichernden Netz AC3 verbunden. Der Eingang des Schaltmittels ist mit einem weiteren Versorgungsnetz AC2 und der Ausgang des Schaltmittels mit dem zu abzusichernden Netz AC3 verbunden.

Das Schaltmittel 4 kann je nach Schaltstellung das Versorgungsnetz AC2 mit dem abzusichernden Netz AC3 verbinden. Arbeiten der Gleichrichter 1 und der Wechselrichter 3 störungsfrei und ist auch das Versorgungsnetz AC1 ungestört, wird das abzusichernde Netz AC3 über den Gleichrichter 1 und den Wechselrichter 3 mit elektrischer Energie versorgt. Das Schaltmittel unterbricht die direkte Verbindung zwischen dem Versorgungsnetz AC2 und dem abzusichernden Netz AC3. Gleichzeitig wird der Energiespeicher 2 über den Gleichrichter 1 mit elektrischer Energie aus dem Ausgang des Gleichrichters 1 versorgt.

Wird die Versorgung des abzusichernden Netzes AC3 durch das Versorgungsnetz AC1 über den Gleichrichter 1 und den Wechselrichter 3 aufgrund einer Störung des Wechselrichters 3 unterbrochen und ist gleichzeitig das Versorgungsnetz AC2 ungestört, wird durch das Schaltmittel 4 die direkte Verbindung zwischen dem Versorgungsnetz AC2 und dem abzusichernden Netz AC3 hergestellt. Die Versorgung erfolgt dann unter Umgehung des Gleichrichters 1 und des Wechselrichters 3.

Ist dagegen das Versorgungsnetz AC1 und das Versorgungsnetz AC2 gestört und wenigstens der Energiespeicher 2 und der Wechselrichter 3 ungestört, ist das Schaltmittel 4 vorzugsweise geöffnet und die Versorgung des abzusichernden Netzes erfolgt über den Wechselrichter 3 aus dem Energiespeicher 2.

Ist schließlich sowohl das Versorgungsnetz AC1 das Versorgungsnetz AC2 als auch der Energiespeicher 2 oder der Wechselrichter 3 gestört, ist die Versorgung des abzusichernden Netzes AC 3 unterbrochen.

Soweit betrachtet entspricht die erfindungemäße USV einer herkömmlichen Online-USV.

Die erfindungsgemäße USV unterscheidet sich von einer herkömmlichen USV, wie sie einleitend beschrieben worden ist, durch eine neue Architektur einer Steuerung, einer Hilfsstromversorgung und einer Messwerterfassung.

Die neue Steuerung wird durch ein erstes Steuerungsteil 5 und ein zweites Steuerungsteil 6 gebildet. Die Steuerungsteile 5, 6 werden durch Schaltungsanordnungen gebildet, die auf Schaltungsträgern angeordnet sind. Die Schaltungsanordnungen sind vorzugsweise identisch aufgebaut und unterscheiden sich lediglich durch eine Programmierung, wobei die Programmierung auch durch die Auswahl einzelner Bauelemente, durch Schalterstellungen, durch Jumper oder durch die Auswahl der Ausgänge der Steuerungsteile erreicht werden kann.

Die Steuerungsteile 5, 6 sind so gestaltet, dass sie dazu in der Lage sind, den Gleichrichter 1 , den Wechselrichter 3 und das Schaltmittel 4 zu steuern oder zu regeln. Dazu sind die Steuerungsteile 5, 6 über Leitungen mit allen zwei der Komponenten, dem Gleichrichter 1 , dem Wechselrichter 3 oder dem Schaltmittel 4, verbunden.

Das Steuern oder Regeln der drei Komponenten 1, 3, 4 oder von nur zwei Komponenten der USV kann gleichzeitig erfolgen. Es ist möglich, dass nur eine einzige der Komponenten 1, 3, 4 gesteuert oder geregelt wird.

Durch die Programmierung der Steuerungsteile 5, 6 kann erreicht werden, dass zum Beispiel das erste Steuerungsteil 5 im ungestörten Zustand des Steuerungsteils 5 zumindest den Gleichrichter 1 steuert und/oder regelt. Es kann ebenso erreicht werden, dass das zweite Steuerungsteil 6 im ungestörten Zustand des Steuerungsteils 6 zumindest den Wechselrichter 3 steuert und/oder regelt.

Sobald eines der beiden Steuerungsteile 5, 6 ausfällt, kann dann das andere Steuerungsteil 6, 5 die Funktion des ausgefallenen Steuerungsteils 5, 6 hinsichtlich des Schaltmittels 4 übernehmen.

Zur Kommunikation des einen Steuerungsteils 5 mit dem anderen Steuerungsteil 6 sind die beiden Steuerungsteile 5, 6 über einen Bus, vorzugsweise über einen CAN-Bus 7 miteinander verbunden.

Die beiden Steuerungsteile 5, 6 werden von einer Hilfsstromversorgung mit elektrischer Energie für den Betrieb versorgt. Die Hilfsstromversorgung wird durch zwei Mittel 8,9 zur Hilfsstromversorgung gebildet. Die beiden Mittel 8, 9 zur Hilfsstromversorgung sind identisch aufgebaut. Sie haben je einen Ausgang, an dem die für den Betrieb der Steuerungsteile 5, 6 notwendige elektrische Energie bereitgestellt wird.

Die Mittel 8, 9 zur Hilfsstromversorgung entnehmen die elektrische Energie je nach Verfügbarkeit aus dem zu Versorgungsnetz AC1, dem Versorgungsnetz AC2, dem abzusichernden Netz AC3 oder dem Energiespeicher 2, weshalb die beiden Mittel 8, 9 zur Hilfsstromversorgung über Eingänge und Leitungen mit dem Versorgungsnetz AC1 , dem Versorgungsnetz AC2, dem abzusichernden Netz AC3 und dem Energiespeicher 2 verbunden sind.

Die Mittel 8, 9 zur Hilfsstromversorgung sind so ausgelegt, dass sie sowohl das erste Steuerungsteil 5 als auch das Steuerungsteil 6 gleichzeitig versorgen können. Die Mittel 8, 9 sind allerdings vorzugsweise durch eine Hardwarefunktion oder eine Programmierung so gestaltet, dass sie jeweils nur die Hälfte der von beiden Steuerungsteilen 5, 6 gleichzeitig aufgenommenen Leistung bereitstellen und somit bei ungestörten Mitteln 8, 9 zur Hilfsstromversorgung nur bis zur Hälfte der Nennleistung belastet werden, was die Lebensdauer der Mittel 8, 9 zu Hilfsstromversorgung gegenüber einer höheren Belastung erhöht.

Schließlich sind die beiden Steuerungsteile 5, 6 mit Sensoren 10 verbunden, mit denen elektrische Größen am Ein- und/oder Ausgang des Gleichrichters 1 und/oder des Wechselrichters 3, am Energiespeicher 2 oder am Schaltmittel 4 gemessen und in ein elektrisches Kleinspannungssignal gewandelt werden kann. Diese Kleinspannungssignale werden über Leitungen den Steuerungsteilen 5, 6 zugeführt. In den Steuerungsteilen 5, 6 werden die Kleinspannungssignale verarbeitet, um den Gleichrichter 1 , den Wechselrichter 2 und/oder das Schaltmittel 4 zu steuern und/oder zu regeln oder den Zustand des Gleichrichters 1, des Energiespeichers 2, des Wechselrichters 3 und/oder des Schaltmittels 4 zu prüfen und Störungen festzustellen.

Die Sensoren 10 sind teilweise paarweise einander zugeordnet, wobei die Sensoren (10) eines Paares die gleiche elektrische Größe messen. Während der eine Sensor 10 eines Paares mit dem einen Steuerungsteil 5 zugeordnet ist, ist der andere Sensor (10) eines Paares mit dem anderen Steuerungsteil 6 verbunden, so dass beiden Steuerungsteile 5, 6 teilweise die gleiche elektrische Größe zur Verfügung gestellt wird. Auch bei den Sensoren ist dadurch für eine Redundanz gesorgt.

Die Sensoren 10 sind vorzugsweise identisch aufgebaut.

## Patentansprüche

1. Anordnung zur unterbrechungsfreien Stromversorgung mit einem Gleichrichter (1), einem Energiespeicher (2) zum Speichern elektrischer Energie, einem Wechselrichter (3), einem Schaltmittel (4) und einer Steuerung (5, 6), wobei der Gleichrichter (1) mit einem Gleichrichtereingang an ein erstes Versorgungsnetz (AC1) anschließbar ist, der Energiespeicher (2) an einen Gleichrichterausgang des Gleichrichters (1) und an einen Wechselrichtereingang des Wechselrichters (3) angeschlossen ist, an einen Wechselrichterausgang des Wechselrichters (3) ein abzusicherndes Netz (AC3) oder ein abzusichernder Verbraucher anschließbar ist, der Gleichrichtereingang, das erste Versorgungsnetz (AC1) oder ein weiteres Versorgungsnetz (AC2) über das Schaltmittel (4) mit dem Wechselrichterausgang verbindbar ist und der Gleichrichter (1), der Wechselrichter (3) und das Schaltmittel (4) mittels der Steuerung (5, 6) steuer- und/oder regelbar ist,
**dadurch gekennzeichnet,**
**dass** die Steuerung (5, 6) zwei Steuerungsteile (5, 6) aufweist, die redundant aufgebaut sind und dass mit den Steuerungsteilen (5, 6) gleichzeitig der Gleichrichter (1) und das Schaltmittel (4) oder der Wechselrichter (3) und das Schaltmittel (4) steuer- oder regelbar ist.

2. Anordnung nach Anspruch 1 , **dadurch gekennzeichnet, dass** die Steuerungsteile (5, 6) identisch aufgebaute Schaltungsanordnungen sind.

3. Anordnung nach Anspruch 1 oder 2, **dadurch gekennzeichnet, dass** die Steuerungsteile (5, 6) programmiert, eingerichtet oder über Ausgänge mit der übrigen Anordnung verbunden sind, wobei ein erstes Steuerungsteil (5) der Steuerungsteile (5, 6) so programmiert, eingerichtet oder über Ausgänge mit der übrigen Anordnung verbunden ist, dass bei ungestörtem ersten Steuerungsteil (5) zumindest der Gleichrichter (1) vom ersten Steuerungsteil (5) steuer- und/oder regelbar ist, und wobei ein zweites Steuerungsteil (6) der Steuerungsteile (5, 6) so programmiert, eingerichtet oder über Ausgänge mit der übrigen Anordnung verbunden ist, dass bei ungestörtem zweiten Steuerungsteil (6) zumindest der Wechselrichter (3) vom zweiten Steuerungsteil (6) steuer- und/oder regelbar ist.

4. Anordnung nach Anspruch 3, **dadurch gekennzeichnet, dass** die Steuerungsteile (5, 6) so programmiert, eingerichtet oder über Ausgänge mit der übrigen Anordnung verbunden sind, dass bei gestörtem ersten Steuerungsteil (5) der Wechselrichter (3) und das Schaltmittel (4) vom zweiten Steuerungsteil (6) steuer- und/oder regelbar und bei gestörtem zweiten Steuerungsteil (6) der Gleichrichter (1) und das Schaltmittel (4) vom ersten Steuerungsteil (5) steuer- und/oder regelbar sind.

5. Anordnung nach einem der Ansprüche 1 bis 4, **dadurch gekennzeichnet, dass** die Anordnung wenigstens zwei Mittel (8, 9) zur Hilfsstromversorgung mit zwei Ausgängen aufweist, an welchem eine Hilfsspannung abgreifbar ist, wobei jeder Ausgang mit einem Eingang für die Hilfsstromversorgung des ersten Steuerungsteils (5) oder des zweiten Steuerungsteils (6) verbunden ist.

6. Anordnung nach Anspruch 5, **dadurch gekennzeichnet, dass** die Mittel (8, 9) zur Hilfsstromversorgung identisch aufgebaute Schaltungsanordnungen sind.

7. Anordnung nach Anspruch 5 oder 6, **dadurch gekennzeichnet, dass** jedes Mittel (8, 9) zur Hilfsstromversorgung einen ersten Eingang hat, über den das Mittel mit dem Gleichrichtereingang verbunden ist, einen zweiten Eingang hat, über den das Mittel mit dem Wechselrichterausgang verbunden ist, und einen dritten Eingang hat, mit dem das Mittel mit dem Energiespeicher (2) verbunden ist.

8. Anordnung nach einem der Ansprüche 1 bis 7, **dadurch gekennzeichnet, dass** die Anordnung Sensoren (10) zum Messen von Spannungen und/oder Strömen aufweist, wobei jeder Sensor (10) über einen Sensorausgang des Sensors (10) mit genau einem Steuerungsteil (5, 6) verbunden ist und mit jedem eine zu messende Größe in ein Kleinspannungssignal wandelbar ist.

9. Anordnung nach Anspruch 8, **dadurch gekennzeichnet, dass** zumindest ein Teil der Sensoren (10) einander paarweise zugeordnet sind, wobei die Sensoren (10) eines Sensorpaares zur Messung der gleichen elektrischen Größe mit Kontakten oder Leitungen der Anordnung verbunden sind und wobei der eine Sensor (10) eines Sensorpaares mit dem ersten Steuerungsteil (5) und der andere Sensor (10) eines Sensorpaares mit dem zweiten Steuerungsteil (6) verbunden ist.

10. Anordnung nach Anspruch 8 oder 9, **dadurch gekennzeichnet, dass** mittels der Sensoren (10) die Spannung am Gleichrichtereingang, am Gleichrichterausgang, am Energiespeicher (2), am Wechselrichtereingang, am Wechselrichterausgang, an der dem weiteren Versorgungsnetz (AC2) zugewandten Seite des Schaltmittel und/oder an der dem abzusichernden Netz (AC3) oder der abzusichernden Last zugewandten Seite des Schaltmittel (4) messbar ist.

11. Anordnung nach einem der Ansprüche 8 bis 10, **dadurch gekennzeichnet, dass** die Sensoren (10) identisch aufgebaute Schaltungsanordnungen sind.

12. Anordnung nach einem der Ansprüche 1 bis 11, **dadurch gekennzeichnet, dass** die Steuerungsteile (5, 6) über einen Kommunikationsbus, zum Beispiel einem CAN-Bus (8) miteinander verbunden sind.

13. Anordnung nach einem der Ansprüche 1 bis 12, **dadurch gekennzeichnet, dass** die Steuerungsteile (5, 6) so programmiert, eingerichtet oder über Ausgänge mit der übrigen Anordnung verbunden sind, dass bei gestörtem ersten Steuerungsteil (5) der Wechselrichter (3), der Gleichrichter (1) und das Schaltmittel (4) vom zweiten Steuerungsteil (6) steuer- und/oder regelbar und/oder bei gestörtem zweiten Steuerungsteil (6) der Wechselrichter (3), der Gleichrichter (1) und das Schaltmittel (4) vom ersten Steuerungsteil (5) steuer- und/oder regelbar sind.

14. Anordnung nach einem der Ansprüche 1 bis 13, **dadurch gekennzeichnet, dass** die Steuerungsteile über einen Kommunikationsbus miteinander verbunden sind.

## Claims

1. Arrangement for an uninterruptible power supply, having a rectifier (1), an energy store (2) for storing electrical energy, an inverter (3), a switching means (4) and a controller (5, 6), wherein the rectifier (1) is connectable by means of a rectifier input to a first supply system (AC1), the energy store (2) is connected to a rectifier output of the rectifier (1) and to an inverter input of the inverter (3), a system (AC3) to be protected or a load to be protected is connectable to an inverter output of the inverter (3), the rectifier input, the first supply system (AC1) or a further supply system (AC2) is connectable to the inverter output via the switching means (4) and the rectifier (1), the inverter (3) and the switching means (4) can be controlled and/or regulated by means of the controller (5, 6),
**characterized**
**in that** the controller (5, 6) has two controller parts (5, 6) which are redundantly constructed, and in that the rectifier (1) and the switching means (4) or the inverter (3) and the switching means (4) can be simultaneously controlled or regulated using the controller parts (5, 6).

2. Arrangement according to Claim 1, **characterized in that** the controller parts (5, 6) are identically constructed circuit arrangements.

3. Arrangement according to Claim 1 or 2, **characterized in that** the controller parts (5, 6) are programmed, set up or connected via outputs to the rest of the arrangement, wherein a first controller part (5) of the controller parts (5, 6) is programmed, set up or connected via outputs to the rest of the arrangement such that, in the event of an undisturbed first controller part (5), at least the rectifier (1) can be controlled and/or regulated by the first controller part (5), and wherein a second controller part (6) of the controller parts (5, 6) is programmed, set up or connected via outputs to the rest of the arrangement such that, in the event of an undisturbed second controller part (6), at least the inverter (3) can be controlled and/or regulated by the second controller part (6).

4. Arrangement according to Claim 3, **characterized in that** the controller parts (5, 6) are programmed, set up or connected via outputs to the rest of the arrangement such that, in the event of a disturbed first controller part (5), the inverter (3) and the switching means (4) can be controlled and/or regulated by the second controller part (6), and, in the event of a disturbed second controller part (6), the rectifier (1) and the switching means (4) can be controlled and/or regulated by the first controller part (5).

5. Arrangement according to any of Claims 1 to 4, **characterized in that** the arrangement has at least two means (8, 9) for auxiliary power supply with two outputs, at which an auxiliary voltage can be tapped, wherein each output is connected to an input for auxiliary power supply of the first controller part (5) or of the second controller part (6).

6. Arrangement according to Claim 5, **characterized in that** the means (8, 9) for auxiliary power supply are identically constructed circuit arrangements.

7. Arrangement according to Claim 5 or 6, **characterized in that** each means (8, 9) for auxiliary power supply has a first input, via which the means is connected to the rectifier input, has a second input, via which the means is connected to the inverter output, and has a third input, via which the means is connected to the energy store (2).

8. Arrangement according to any of Claims 1 to 7, **characterized in that** the arrangement has sensors (10) for measuring voltages and/or currents, wherein each sensor (10) is connected via a sensor output of the sensor (10) to precisely one controller part (5, 6) and, by means of each, a variable to be measured can be converted into an extra-low voltage signal.

9. Arrangement according to Claim 8, **characterized in that** at least some of the sensors (10) are assigned in pairs with respect to one another, wherein the sensors (10) of a sensor pair for measuring the same electrical variable are connected to contacts or lines of the arrangement, and wherein the one sensor (10) of a sensor pair is connected to the first controller part (5) and the other sensor (10) of a sensor pair is connected to the second controller part (6).

10. Arrangement according to Claim 8 or 9, **characterized in that**, by means of the sensors (10), the voltage can be measured at the rectifier input, at the rectifier output, at the energy store (2), at the inverter input, at the inverter output, at the side of the switching means which faces the further supply system (AC2) and/or at the side of the switching means (4) which faces the system (AC3) to be protected or the load to be protected.

11. Arrangement according to any of Claims 8 to 10, **characterized in that** the sensors (10) are identically constructed circuit arrangements.

12. Arrangement according to any of Claims 1 to 11, **characterized in that** the controller parts (5, 6) are connected to one another via a communication bus, for example a CAN bus (8).

13. Arrangement according to any of Claims 1 to 12, **characterized in that** the controller parts (5, 6) are programmed, set up or connected via outputs to the rest of the arrangement such that, in the event of a disturbed first controller part (5), the inverter (3), the rectifier (1) and the switching means (4) can be controlled and/or regulated by the second controller part (6) and/or, in the event of a disturbed second controller part (6), the inverter (3), the rectifier (1) and the switching means (4) can be controlled and/or regulated by the first controller part (5).

14. Arrangement according to any of Claims 1 to 13, **characterized in that** the controller parts are connected to one another via a communication bus.

## Revendications

1. Agencement destiné à l'alimentation en courant sans interruption, doté d'un redresseur (1), d'un accumulateur d'énergie (2) servant à accumuler de l'énergie électrique, d'un ondulateur (3), d'un moyen de connexion (4) et d'un élément de commande (5, 6), le redresseur (1) pouvant être raccordé à une entrée de redresseur située au niveau d'un premier réseau d'alimentation (AC1), l'accumulateur d'énergie (2) étant raccordé à une sortie de redresseur du redresseur (1) et à une entrée d'ondulateur de l'ondulateur (3), un réseau (AC3) à sécuriser ou un consommateur électrique à sécuriser pouvant être raccordés à une sortie d'ondulateur de l'ondulateur (3), l'entrée de redresseur, le premier réseau d'alimentation (AC1) ou un autre réseau d'alimentation (AC2) supplémentaire pouvant être reliés à la sortie d'ondulateur via le moyen de connexion (4) et le redresseur (1), l'ondulateur (3) et le moyen de connexion (4) pouvant être réglés et/ou commandés à l'aide de l'élément de commande (5, 6) ;
**caractérisé en ce que** :
l'élément de commande (5, 6) comporte deux parties d'élément de commande (5, 6) structurées de façon redondante et le redresseur (1) et le moyen de connexion (4) ou l'ondulateur (3) et le moyen de connexion (4) pouvant être commandés ou réglés simultanément avec les parties d'élément de commande (5, 6).

2. Agencement selon la revendication 1, **caractérisé en ce que** les parties d'élément de commande (5, 6) sont des agencements de connexion structurés de façon identique.

3. Agencement selon la revendication 1 ou 2, **caractérisé en ce que** les parties d'élément de commande (5, 6) sont programmées, orientées ou reliées au reste de l'agencement via les sorties, une première partie d'élément de commande (5) des parties d'élément de commande (5, 6) étant programmée, orientée ou reliée de telle sorte au reste de l'agencement via les sorties qu'en cas de première partie d'élément de commande (5) non perturbée, le redresseur (1) au moins peut être commandé et/ou réglé par la première partie d'élément de commande (5) et une deuxième partie d'élément de commande (6) des parties d'élément de commande (5, 6) étant programmée, orientée ou reliée au reste de l'agencement via les sorties de telle sorte qu'en cas de deuxième partie d'élément de commande (6) non perturbée, au moins l'ondulateur (3) peut être commandé et/ou réglé par la deuxième partie d'élément de commande (6).

4. Agencement selon la revendication 3, **caractérisé en ce que** les parties d'élément de commande (5, 6) sont programmées, orientées ou reliées de telle sorte au reste de l'agencement via les sorties qu'en cas de première partie d'élément de commande (5) perturbée, l'ondulateur (3) et le moyen de connexion (4) peuvent être commandés et/ou réglés par la deuxième partie d'élément de commande (6) et qu'en cas de deuxième partie d'élément de commande (6) perturbée, le redresseur (1) et le moyen de connexion (4) peuvent être commandés et/ou réglés par la première partie d'élément de commande (5).

5. Agencement selon l'une quelconque des revendications 1 à 4, **caractérisé en ce que** l'agencement comporte au moins deux moyens (8, 9) d'alimentation en courant auxiliaire avec deux sorties au niveau desquelles une tension auxiliaire peut être prise, chaque sortie étant reliée à une entrée pour l'alimentation en courant auxiliaire de la première partie d'élément de commande (5) ou de la deuxième partie d'élément de commande (6).

6. Agencement selon la revendication 5, **caractérisé en ce que** les moyens (8, 9) d'alimentation en courant auxiliaire sont des agencements de connexion de structure identique.

7. Agencement selon la revendication 5 ou 6, **caractérisé en ce que** chaque moyen (8, 9) d'alimentation en courant auxiliaire a une première entrée via laquelle le moyen est relié à l'entrée de redresseur, une deuxième entrée via laquelle le moyen est relié à la sortie d'ondulateur et une troisième entrée avec laquelle le moyen est relié à l'accumulateur d'énergie (2).

8. Agencement selon l'une quelconque des revendications 1 à 7, **caractérisé en ce que** l'agencement comporte des capteurs (10) de mesure de tensions et/ou de courants, chaque capteur (10) étant relié à précisément une partie d'élément de commande (5, 6) via une sortie de capteur du capteur (10) et une grandeur à mesurer pouvant être convertie en un signal basse tension à l'aide de chacune de ces parties.

9. Agencement selon la revendication 8, **caractérisé en ce qu'**au moins une partie des capteurs (10) sont associés entre eux par paire, les capteurs (10) d'une paire de capteurs étant reliés aux contacts ou câbles de l'agencement pour mesurer la même grandeur électrique et le premier capteur (10) d'une paire de capteurs étant relié à la première partie d'élément de commande (5) et l'autre capteur (10) d'une paire de capteurs était relié à la deuxième partie d'élément de commande (6).

10. Agencement selon la revendication 8 ou 9, **caractérisé en ce que** la tension peut être mesurée à l'aide de capteurs (10) à l'entrée de redresseur, à la sortie de redresseur, à l'accumulateur d'énergie (2), à l'entrée d'ondulateur, à la sortie d'ondulateur, au côté du moyen de connexion orienté vers l'autre réseau d'alimentation (AC2) et/ou au niveau du côté du moyen de connexion (4) orienté vers le réseau (AC3) à sécuriser ou de la charge à sécuriser.

11. Agencement selon l'une quelconque des revendications 8 à 10, **caractérisé en ce que** les capteurs (10) sont des agencements de connexion de structure identique.

12. Agencement selon l'une quelconque des revendications 1 à 11, **caractérisé en ce que** les parties d'élément de commande (5, 6) sont reliées entre elles via un bus de communication, par exemple un bus CAN (8).

13. Agencement selon l'une quelconque des revendications 1 à 12, **caractérisé en ce que** les parties d'élément de commande (5, 6) sont programmées, orientées ou reliées de telle sorte au reste de l'agencement via les sorties qu'en cas de première partie d'élément de commande (5) perturbée, l'ondulateur (3), le redresseur (1) et le moyen de connexion (4) peuvent être commandés et/ou réglés par la deuxième partie d'élément de commande (6) et/ou qu'en cas de deuxième partie d'élément de commande (6) perturbée, l'ondulateur (3), le redresseur (1) et le moyen de connexion (4) peuvent être commandés et/ou réglés par la première partie d'élément de commande (5).

14. Agencement selon l'une quelconque des revendications 1 à 13, **caractérisé en ce que** les parties d'élément de commande sont reliées entre elles via un bus de communication.
